# EUROPEAN PATENT APPLICATION

(11) **EP 1 462 646 A1**
(43) Date of publication of application: **29.09.2004**
(21) Application number: 02785931.3
(22) Date of filing: 11.11.2002
(51) Int. Cl.: F03D 3/02, F03D 3/04

(54) **UNIT TYPE WINDMILL**

(30) Priority: 03.12.2001 JP 2001402390
(71) Applicant: IIZUKA, Takashi, Nakano-ku, Tokyo 164-0014 (JP)
(72) Inventor: IIZUKA, Takashi, Nakano-ku, Tokyo 164-0014 (JP)
(74) Representative: Neugebauer, Jürgen, Dipl.Phys.
(86) International application number: PCT/JP2002/011719
(87) International publication number: WO 2003/048567

(57) **Abstract**

A vane unit wherein vanes (3) are supported by bearings (2) on both sides of a rectangular parallelepipedic frame (1) and the end of a vane shaft (4) is formed with a recessed or raised meshing tooth (5). Vane units (6) are connected together horizontally and vertically to constitute a combination windmill (7), and placed in the middle of a float (8) in the ocean. The float is moored at a portion thereof located forwardly of the middle to a pole fixed to a chain or to the seabed.

## Description

### Technical Field

The present invention is directed to technology that provides and standardizes a unit type windmill rotor to facilitate installation of a windmill and achieve a universal windmill structure.

### Background Art

Currently popular windmills equipped with large propellers are suitable to generate a large output. However, such windmills have problems. Specifically, these windmills require strict installation conditions and high technology, and do not operate in a desired manner in a weak wind.

In the present invention, drag-type windmills, such as Savonius windmills and cross-flow windmills, which are suited for a weak wind are arranged horizontally so as to connect the windmills in the horizontal and vertical directions. This arrangement facilitates the installation work and allows building of a large-scale windmill array.

### Disclosure of the Invention

A vane unit (unit windmill) 6 includes vanes 3, and a shaft 4 of the vanes 3 is rotatably supported by bearings 2 on both sides of a rectangular parallelepipedic frame (housing) 1. The end of the vane shaft 4 has a recessed or raised meshing tooth 5.

Vane units 6 are connected together horizontally and vertically to constitute a combination windmill 7, and placed in the middle of a float 8 in the ocean. The front center of the float is moored to a chain or a pole fixed to the seabed.

### Brief Description of the Drawings

Figure 1 illustrates a perspective view of a vane unit;
Figure 2 illustrates a plan view of a combination windmill situated on a float; and

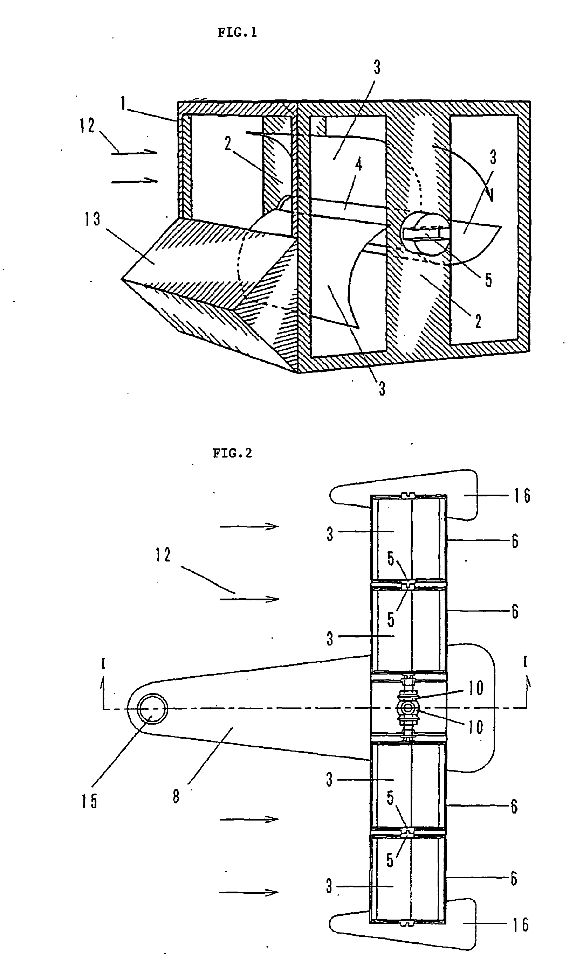

Figure 2 illustrates a cross sectional view taken along the line I-I.

### Best Mode For Carrying Out the Invention

A coupling is generally used to connect two shafts. When a service man stands between large windmill vanes and uses a coupling to connect a shaft of a windmill to a shaft of another windmill, a large space is required between the vanes. This is not desirable because the vanes have to effectively catch wind flow.

The perspective view of a vane unit (unit windmill) is shown in Figure 1. As illustrated, the vane unit 6 has the same dimension in width, height and thickness. An adjacent vane unit will be connected to the illustrated vane unit by the vane shafts having recessed and raised engagement portions.

Therefore, the vane shafts of the vane units of the present invention can be operatively coupled with each other by simply arranging and fixing the vane units side by side.

The vane units 6 are coupled to each other in the horizontal direction, and these vane units are connected in the vertical direction (piled up) and fixed together in order to build a large combination windmill.

Figure 2 illustrates a top view of a combination windmill 7 placed on a float 8 in the ocean. A total output of all the vane units of the combination windmill is transmitted to a vertical output shaft via bevel gears 10. The vertical output shaft extends in the middle of the combination windmill. The total output of the combination windmill is then transmitted to a rotor of a lower generator 11.

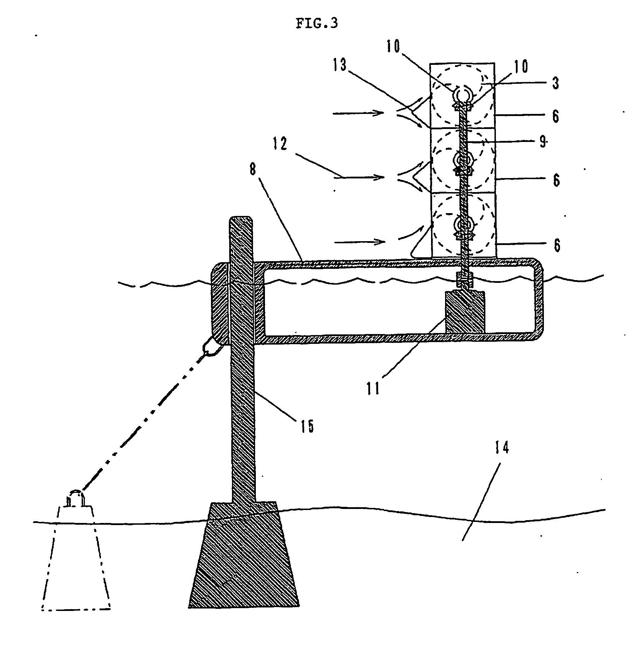

As shown in Figure 3, the front portion of the float 8 is supported by a vertical pole 15 fixed to the seabed 14 such that the float 8 can pivot about the vertical pole 15 and move up and down along the vertical pole 15. When a wind blows against the combination windmill, the wind pushes the combination windmill toward the downstream of the wind air stream. The combination windmill is secured on the float such that the wind 12 perpendicularly collides against the front face of the combination windmill when the combination windmill is moved to the most downstream position. It should be noted that a similar technical effect can be obtained if the front portion of the float 8 is moored to a chain extending from the seabed.

The connection (coupling) between the unit windmills by engagement of the raised and recessed teeth is effective to absorb or prevent strong vibrations, which are encountered in ocean (wind currents) for example. Providing auxiliary floats 16 at right and left ends of the combination windmill is also effective to absorb a relatively big wave. This contributes to the increase of life of the windmill.

Rectification plates 13 attached to frames 1 block back-flow wind (backwind) to the vanes, and each rectification plate 13 re-directs the back-flow wind toward the lower vanes. Accordingly, it is possible to nearly double the energy efficiency of the windmill. This is a very unique advantage of the windmill of the present invention.

### Industrial Applicability

Vanes are the most important elements of a windmill. The vanes are provided as units in the present invention. Thus, mass production and weight reduction is possible. This facilitates transportation and installation of the windmills. For instance, the windmill can operate on the top of a building in a desired manner even if only a weak wind blows near the building. By dramatically increasing the number of windmills, it is possible to greatly reduce consumption of fossil fuel.

## Claims

1. A vane unit comprising vanes 3 rotatably supported by bearings 2 on both sides of a rectangular parallelepipedic frame 1, with a recessed or raised meshing tooth 5 being provided at an end of a vane shaft 4.

2. A combination windmill comprising vane units 6 connected together horizontally and vertically.

3. An ocean windmill located in the middle of a float 8 in a combination windmill ocean, with a front center of the float being moored to a chain or a pole fixed to a seabed.
